# EUROPEAN PATENT SPECIFICATION

(11) **EP 2 468 157 B1**
(45) Date of publication and mention of the grant of the patent: **18.06.2014**
(21) Application number: 11179230.5
(22) Date of filing: 29.08.2011
(51) Int. Cl.: A47J 36/04, C01B 31/04

(54) **Apparatus for cooking by heat convection comprising temperature control layer**
Gerät zum Kochen durch Wärmekonvektion mit Temperaturregelungsschicht
Appareil de cuisson en utilisant la convection thermique avec une couche de régulation de température

(30) Priority: 24.12.2010 KR 20100134648
(43) Date of publication of application: 27.06.2012
(73) Proprietor: Ko, Young Shin, Gyeonggi-do (KR)
(72) Inventor: Ko, Young Shin, Gyeonggi-do (KR)
(74) Representative: Kastel, Stefan

(56) References cited:
- EP-A1- 0 318 175
- JP-A- 7 031 546
- KR-U- 20090 006 658

## Description

### CROSS-REFERENCE TO RELATED APPLICATION

This application claims priority to Korean Patent Application No. 10-2010-0134648 filed on December 24, 2010.

### BACKGROUND

### 1. Technical Field

The embodiments of the present invention are directed to a cooker, and more specifically to a cooker having a temperature control layer that inhibits the cooker from being excessively heated up, thus preventing food from burning.

### 2. Discussion of the Related Art

Conventional cookware, when heated for cooking, transfers the majority of heat to food therein because it has high thermal conductivity, thus causing the food to burn soon. Accordingly, there is a need for a cooker that may prevent a sharp increase in temperature and may maintain a constant maximum temperature even though being kept heated, thereby preventing food from burning.

EP 0 318 175 A1 discloses a process for the manufacture of glass ceramic articles, such as cookware articles, with a graphite encapsulated insert.

KR-U-2009 0006658 also refers to cookware articles.

Hence, the object of the invention is to provide an improved cooker.

The problem is solved by the cooker according to claim 1 and the method of manufacturing a cooker according to claim 9. Preferred embodiments of the cooker and the method are described in the dependant claims.

### SUMMARY

According to the present invention, there is provided a cooker comprising a heating part contacting heat, and a temperature control layer on a first surface of the heating part, wherein the temperature control layer includes expandable graphite.

The temperature control layer further includes a frit-based ceramic material.

The expandable graphite and the frit-based ceramic material are mixed with each other at a weight ratio of 10:1 to 10:3.

The expandable graphite is formed by expanding source graphite, wherein an interlayer distance of the expandable graphite corresponds to 30 to 150 times of an interlayer distance of the source graphite.

An average particle size of the expandable graphite is in a range from about 0.1 µm to 9 µm.

A thickness of the temperature control layer is in a range from about 0.2 µm to 10 µm.

The cooker is any one of a frying pan, a pan for barbecue, and a cooker for frying.

The cooker further comprises a Teflon coating layer on a top surface of the temperature control layer.

The cooker further comprises a lower temperature control layer on a bottom surface of the cooker, wherein the lower temperature control layer has a thickness of about 0.2 µm to about 2 µm.

According to an embodiment of the present invention, there is provided a method of manufacturing a cooker comprising performing heat treatment on graphite at 250°C to 800°C to form expandable graphite, crushing the expandable graphite to a size of about 0.1 µm to about 9 µm, mixing the crushed expandable graphite with a frit-based ceramic material and a liquid, and jetting the mixed material to an inner surface of the cooker to form a temperature control layer.

The frit-based ceramic material includes at least one selected from the group consisting of Na₂SiO₃ and Al₂O₃-SiO₂.

A weight ratio of the expandable graphite and the frit-based ceramic material is 10:1 to 10:3.

According to the embodiments of the present invention, the cooker is gradually heated up with a maximum temperature kept constant at 350°C due to the temperature control layer. Accordingly, food is prevented from burning soon.

### BRIEF DESCRIPTION OF THE DRAWINGS

The embodiments of the present invention will become readily apparent by reference to the following detailed description when considered in conjunction with the accompanying drawings wherein:
Fig. 1 is a perspective view illustrating a cooker according to an embodiment of the present invention;
Fig. 2 is a cross sectional view taken along line A-A' of Fig. 1; and
Fig. 3 is a graph illustrating changes in temperature, over time, of inner surfaces of a conventional frying pan and a cooker according to an embodiment of the present invention.

### DESCRIPTION OF THE EMBODIMENTS

Hereinafter, embodiments of the present invention will be described in detail with reference to the accompanying drawings, wherein the same reference numerals may be used to denote the same or substantially the same elements throughout the specification and the drawings.

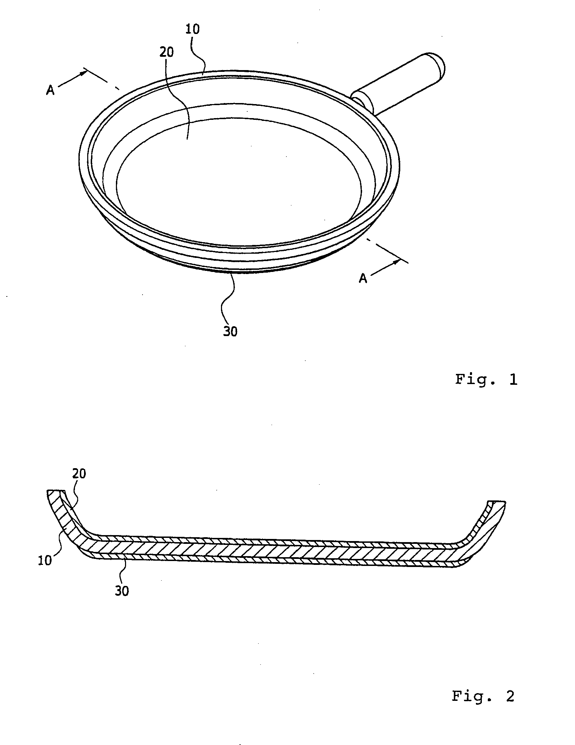

Referring to Fig. 1, a cooker according to an embodiment includes a heating part 10 and a handle. The heating part 10 contacts heat. The heating part 10 includes an outer surface and an inner surface. The outer surface directly receives heat. The inner surface is opposite to the outer surface. An object to be cooked is seated on the inner surface to be indirectly heated via the outer and inner surfaces.

The cooker is not limited to a specific type. Any type of cooker may be included in the cooker as long as the outer surface is directly heated while food may be cooked on the inner surface. Examples of the cooker include a one-sided or both-sided frying pan, a pan for barbecue, and various cookers for frying.

A temperature control layer 20 is formed on the inner surface to control a heating temperature. The temperature control layer prevents the inner surface from being heated to more than a predetermined temperature upon heating.

The temperature control layer 20 has a predetermined thickness. The temperature control layer 20 controls the temperature so that food is not burned on the inner surface. Even when the temperature of fire is too high, the temperature control layer 20 allows the inner surface to maintain an optimal temperature for cooking.

The temperature control layer 20 includes expandable graphite and a frit-based ceramic material. The expandable graphite is produced by heating graphite phosphate at a predetermined temperature to expand an interlayer distance of the graphite.

An interlayer distance of general graphite ranges from about 3.40 µm to about 3.55 µm. According to an embodiment, an interlayer distance of the expandable graphite may be expanded up to about 30 times to about 150 times the range of about 3.40 µm to about 3.55 µm.

When the interlayer distance of the expandable graphite is less than about 30 times of 3.55 µm, a temperature of the cooker is more than a temperature proper for cooking, which causes the food to be easily burned. When the interlayer distance of the expandable graphite is more than about 150 times of about 3.40 µm to about 3.55 µm, the temperature of the cooker is less than the temperature proper for cooking, which causes the food to be half-cooked.

The frit-based ceramic material includes any material used for conventional enamel coating. For example, according to an embodiment, the frit-based ceramic material includes one or more materials selected from the group consisting of Na₂SiO₃ and Al₂O₃-SiO₂.

The expandable graphite and the frit-based ceramic material are mixed to each other at a weight ratio of 10:1 to 10:3. The frit-based ceramic material allows the expandable graphite to be uniformly applied on the inner surface of the cooker, and allows food to be evenly cooked by eradiating far infrared rays.

When the weight ratio of the expandable graphite and the frit-based ceramic material is less than 10:1, the content of the expandable graphite is too small, which causes it difficult for the cooker to reach a desired temperature. When the weight ratio is more than 10:3, the too much content of the expandable graphite causes it difficult to coat the temperature control layer 20 on the inner surface.

The temperature control layer 20 has a thickness of about 0.2 µm to about 10 µm. When the thickness of the temperature control layer 20 is less than 0.2 µm, the temperature control layer 20 may not provide a desired cooking temperature. When the thickness of the temperature control layer 20 is more than 10 µm, it is difficult to form the temperature control layer 20 to have a uniform thickness.

When an average particle size of the expandable graphite is less than 0.1 µm, the particles of the expandable graphite are spread in the temperature control layer 20 so that the temperature control layer 20 may not effectively block heat at its lower part. When the average particle size of the expandable graphite is more than 9 µm, the temperature control layer 20 ends up having an uneven surface, which renders it difficult to uniformly transfer heat to the overall inner surface. According to an embodiment, the average particle size of the expandable graphite ranges from about 0.1 µm to about 9 µm.

According to an embodiment, a Teflon layer (not shown) may be formed on a top surface of the temperature control layer 20. The Teflon layer prevents food from sticking. Further, even after cooking, no oil or unwanted material is left over the Teflon layer, thus allowing the cooker to be easily washed.

A lower temperature control layer 30 is formed on a bottom surface of the heating part 10.

The low temperature control layer 30 may be formed of the same material as the temperature control layer 20. The heating temperature may be double controlled by the temperature control layer 20 and the low temperature control layer 30, thus making it possible to further evenly transfer heat over the food. According to an embodiment, the low temperature control layer 30 has a thickness of about 0.2 µm to about 2 µm.

A method of manufacturing a cooker according to an embodiment is now described.

The manufacturing method of a cooker includes a first step of performing heat treatment on graphite at 250°C to 800°C to form expandable graphite, a second step of crushing the expandable graphite to a size of about 0.1 µm to about 9 µm, and a third step of mixing the crushed expandable graphite with a frit-based ceramic material and water and jetting the mixed material to the inner surface of the cooker.

The first step is now described in greater detail. A chemical is intercalated into a space between layers of graphite phosphate. Any chemicals that may be intercalated between the layers of the graphite phosphate, such as, for example, sulfuric acid or alkali metals.

Then, the resultant material is washed with water (H₂O) to remove the intercalated chemical and is then dried. The dried graphite is subjected to heat treatment at 250°C to 800°C, thereby producing expandable graphite. The produced expandable graphite has an interlayer distance that corresponds to about 30 times to about 150 times of 3.55 µm.

In the second step, the expandable graphite produced in the first step is crushed to have a size of about 0.1 µm to about 9 µm using any graphite crushing methods.

Thereafter, in the third step, the expandable graphite and a frit-based ceramic material are mixed with each other at a weight ratio of 10:1 to 10:3.

The mixed material is then mixed with water or alcohol, and is then applied onto the inner surface to a thickness of about 0.2 µm to about 10 µm by jetting.

Next, the resultant material is heated up to a temperature of 400 to 500°C, and is then cooled to a room temperature so that the temperature control layer is effectively fixed onto the inner surface of the cooker.

Hereinafter, changes in temperature over time are compared between a conventional frying pan and a cooker having a temperature control layer according to an embodiment of the present invention.

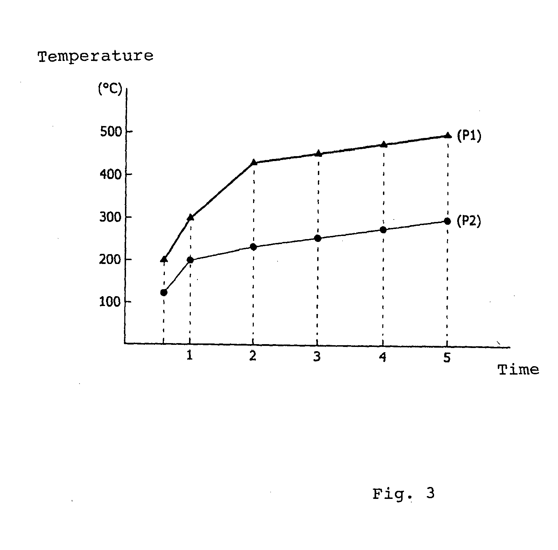

Fig. 3 is a graph illustrating changes in temperature, over time, of inner surfaces of a conventional frying pan and a cooker according to an embodiment of the present invention. Referring to Fig. 3, the temperature of the conventional frying pan is increased to 200°C after 30 seconds, to 300°C after 1 minute, and to 450°C after about 2 minutes.

The cooker according to the present embodiment is heated up to 145°C after 30 seconds, up to 200°C after 1 minute, and up to 250°C after about 2 minutes. The temperature of cooker remains at about 300°C after about 5 minutes.

It can be seen from the above results that the cooker according to the embodiments may make the temperature slowly increase and may allow the maximum temperature to be saturated around 350°C, thus preventing food from being burned even after a proper cooking time for the food has elapsed.

The invention has been explained above with reference to exemplary embodiments. It will be evident to those skilled in the art that various modifications may be made thereto without departing from the broader scope of the invention. Further, although the invention has been described in the context its implementation in particular environments and for particular applications, those skilled in the art will recognize that the present invention's usefulness is not limited thereto and that the invention can be beneficially utilized in any number of environments and implementations. The foregoing description and drawings are, accordingly, to be regarded in an illustrative rather than a restrictive sense.

## Claims

1. A cooker comprising:
a heating part (10) contacting heat; and
a temperature control layer (20) on a first surface of the heating part (10), wherein the temperature control layer (20) includes expandable graphite, **characterized in that**
the temperature control layer (20) further includes a frit-based ceramic material.

2. The cooker of claim 1, wherein the expandable graphite and the frit-based ceramic material are mixed with each other at a weight ratio of 10:1 to 10:3.

3. The cooker of claim 1, wherein the expandable graphite is formed by expanding source graphite, wherein an interlayer distance of the expandable graphite corresponds to 30 to 150 times of an interlayer distance of the source graphite.

4. The cooker of claim 1, wherein an average particle size of the expandable graphite is in a range from about 0.1 µm to about 9 µm.

5. The cooker of claim 1, wherein a thickness of the temperature control layer (20) is in a range from about 0.2 µm to about 10 µm.

6. The cooker of claim 1, wherein the cooker is any one of a frying pan, a pan for barbecue, and a cooker for frying.

7. The cooker of claim 1, further comprising a Teflon coating layer on a top surface of the temperature control layer (20).

8. The cooker of claim 1, further comprising a lower temperature control layer (30) on a bottom surface of the cooker, wherein the lower temperature control layer (30) has a thickness of about 0.2 µm to about 2 µm.

9. A method of manufacturing a cooker comprising:
performing heat treatment on graphite at 250°C to 800°C to form expandable graphite;
crushing the expandable graphite to a size of about 0.1 µm to about 9 µm;
mixing the crushed expandable graphite with a frit-based ceramic material and a liquid; and
jetting the mixed material to an inner surface of the cooker to form a temperature control layer (20).

10. The method of claim 9, wherein the frit-based ceramic material includes at least one selected from the group consisting of Na₂SiO₃ and Al₂O₃-SiO₂.

11. The method of claim 9, wherein a weight ratio of the expandable graphite and the frit-based ceramic material is 10:1 to 10:3.

## Patentansprüche

1. Kochgerät, umfassend:
ein wärmeübertragendes Heizteil (10); und
eine Temperaturregulierungsschicht (20) auf einer ersten Fläche des Heizteils (10), wobei die Temperaturregulierungsschicht (20) Blähgraphit beinhaltet, **dadurch gekennzeichnet, dass**
die Temperaturregulierungsschicht (20) weiterhin ein auf Fritte basierendes keramisches Material umfasst.

2. Kochgerät nach Anspruch 1, wobei der Blähgraphit und das auf Fritte basierende keramische Material in einem Gewichtsverhältnis von 10:1 bis 10:3 miteinander vermischt sind.

3. Kochgerät nach Anspruch 1, wobei der Blähgraphit durch Ausdehnung eines Ausgangsgraphits gebildet ist, wobei ein Zwischenschichtabstand des Blähraphits 30 bis 150-fach dem Zwischenschichtabstand des Ausgangsgraphits entspricht.

4. Kochgerät nach Anspruch 1, wobei die durchschnittliche Partikelgröße des Blähgraphits im Bereich von etwa 0,1 µm bis etwa 9 µm liegt.

5. Kochgerät nach Anspruch 1, wobei die Dicke der Temperaturregulierungsschicht (20) im Bereich von etwa 0,2 µm bis etwa 10 µm liegt.

6. Kochgerät nach Anspruch 1, wobei das Kochgerät irgendeines der Geräte Bratpfanne, Grillpfanne oder Kochgerät zum Braten ist.

7. Kochgerät nach Anspruch 1, ferner umfassend eine Teflonbeschichtung auf einer Deckfläche der Temperaturregulierungsschicht (20).

8. Kochgerät nach Anspruch 1, ferner umfassend eine untere Temperaturregulierungsschicht (30) an einer unteren Fläche des Kochgeräts, wobei die untere Temperaturregulierungsschicht (30) eine Dicke von etwa 0,2 µm bis etwa 2 µm aufweist.

9. Verfahren zur Herstellung eines Kochgeräts umfassend:
Durchführung einer Wärmebehandlung an Graphit bei 250°C bis 800°C, um Blähgraphit zu bilden;
Zerkleinern des Blähgraphits auf eine Größe von etwa 0,1 µm bis etwa 9 µm;
Vermischen des zerkleinerten Blähgraphits mit einem auf Fritte basierenden keramischen Material und einer Flüssigkeit; und
Einarbeiten des vermischten Materials in eine innere Fläche des Kochgeräts, um eine Temperaturregulierungsschicht (20) zu bilden.

10. Verfahren nach Anspruch 9, wobei das auf Fritte basierende keramische Material wenigstens eines umfasst, das aus der Gruppe Na₂SiO₃ und/oder Al_{2O}3-SiO₂ ausgewählt ist.

11. Verfahren nach Anspruch 9, wobei das Gewichtsverhältnis zwischen dem Blähgraphit und dem auf Fritte basierenden keramischen Material 10:1 bis 10:3 beträgt.

## Revendications

1. Appareil de cuisson comprenant :
une partie de chauffage (10) en contact avec la chaleur, et
une couche de contrôle de la température (20) située sur une première surface de la partie de chauffage (10), la couche de contrôle de la température (20) renfermant du graphite expansible,
**caractérisé en ce que**
la couche de contrôle de la température (20) renferme en outre un matériau céramique à base de matière vitrifiable.

2. Appareil de cuisson conforme à la revendication 1, dans lequel le graphite expansible et le matériau céramique à base de matière vitrifiable sont mélangés selon un rapport pondéral de 10 : 1 à 10 : 3.

3. Appareil de cuisson conforme à la revendication 1, dans lequel le graphite expansible est formé par expansion d'une source de graphite, la distance inter-feuillets du graphite expansible correspondant à 30 à 150 fois la distance inter-feuillets de la source de graphite.

4. Appareil de cuisson conforme à la revendication 1, dans lequel la granulométrie moyenne du graphite expansible est située dans une plage comprise entre environ 1 µm à environ 9 µm.

5. Appareil de cuisson conforme à la revendication 1, dans lequel l'épaisseur de la couche de contrôle de la température (20) est située dans la plage allant d'environ 0.2 µm à environ 10 µm.

6. Appareil de cuisson conforme à la revendication 1, constitué par une poêle à frire, une poêle pour barbecue ou un appareil pour friture.

7. Appareil de cuisson conforme à la revendication 1, comprenant en outre une couche de revêtement en Téflon située sur la surface supérieure de la couche de contrôle de la température (20).

8. Appareil de cuisson conforme à la revendication 1, comprenant en outre une couche de contrôle de la température inférieure (30) située sur la face inférieure de l'appareil, cette couche de contrôle de la température inférieure (30) ayant une épaisseur d'environ 0.2 µm à environ 2 µm.

9. Procédé d'obtention d'un appareil de cuisson comprenant les étapes consistant à :
mettre en oeuvre un traitement thermique de graphite à 250°C à 800°C pour former du graphite expansible,
broyer le graphite expansible jusqu'à obtenir une granulométrie d'environ 0.1 µm à environ 9 µm,
mélanger le graphite expansible broyé avec un matériau céramique à base de matière vitrifiable et un liquide, et
projeter le matériau mélangé sur la surface interne de l'appareil de cuisson pour former une couche de contrôle de la température (20).

10. Procédé conforme à la revendication 9, selon lequel le matériau céramique à base de matière vitrifiable renferme au moins un matériau choisi dans le groupe formé par Na₂SiO₃ et Al₂O₃-SiO₂.

11. Procédé conforme à la revendication 9, selon lequel le rapport pondéral du graphite expansible et du matériau céramique à base de matière vitrifiable est de 10 : 1 à 10 : 3.
